**Europäisches Patentamt**

**European Patent Office**

**Office européen des brevets**

(19)

(11) Veröffentlichungsnummer : **0 337 479 B1**

(12) **EUROPÄISCHE PATENTSCHRIFT**

(45) Veröffentlichungstag der Patentschrift :
**15.07.92 Patentblatt 92/29**

(21) Anmeldenummer : **89106708.4**

(22) Anmeldetag : **14.04.89**

(51) Int. Cl.⁵ : **C01B 33/34, C01B 33/32**

(54) **Verfahren zur Herstellung von Zeolithen.**

(30) Priorität : **15.04.88 DE 3812592**

(43) Veröffentlichungstag der Anmeldung :
**18.10.89 Patentblatt 89/42**

(45) Bekanntmachung des Hinweises auf die
Patenterteilung :
**15.07.92 Patentblatt 92/29**

(84) Benannte Vertragsstaaten :
**AT BE DE FR GB IT NL**

(56) Entgegenhaltungen :
**EP-A- 0 017 027**
**US-A- 3 411 874**
**US-A- 3 586 479**

(73) Patentinhaber : **DEGGENDORFER WERFT
UND EISENBAU GMBH
Postfach 1209 Werftstrasse 17
W-8360 Deggendorf (DE)**

(72) Erfinder : **Maier, Gottfried, Dipl.-Ing.
Finsinger Strasse 30
W-8354 Metten (DE)**
Erfinder : **Dachs, Josef, Dr.
Graflinger Strasse 7
W-8360 Deggendorf (DE)**
Erfinder : **Laber, Walter
Hengersberger Strasse 61
W-8360 Deggendorf (DE)**

(74) Vertreter : **Bauer, Robert, Dipl.-Ing. et al
Boeters & Bauer Patentanwälte Bereiteranger
15
W-8000 München 90 (DE)**

EP 0 337 479 B1

## Beschreibung

Die Erfindung betrifft ein Verfahren zur Herstellung von Zeolithen in Gegenwart von Fluorwasserstoff.

Nach der DE-B2-1 767 235 kann man Zeolithe vom Strukturtyp ZSM-5 dadurch herstellen, daß man eine Reaktionsmischung aus einer $SiO_2$-Komponente, Na-Aluminat, Wasser und Tetrapropylammoniumoxid auf Temperaturen von 100 bis 175 °C erhitzt. Die erhaltenen Zeolithe lassen sich als Katalysatoren für die Umwandlung von Kohlenwasserstoffen verwenden.

Aus der EP-A1-0 094 288 ist eine Herstellung von Zeolithen vom Strukturtyp ZSM-5 bekannt, bei dem man in einem wässerigen Medium Galliumoxid oder Natriumaluminat in Gegenwart von Natriumhydroxid mit Hexafluorokieselsäure umsetzt; vgl. Seite 10 und Seite 11 (Beispiel 1).

In der DE-A1-2 909-929 wird ein Verfahren zur Herstellung eines Zeolithen vom Strukturtyp ZSM-5 aus $SiO_2$, Alkali und einem Oxid eines 3-wertigen Metalls in Gegenwart von Aminen durch hydrothermale Kristallisation beschrieben, bei dem als Ausgangsstoff Glas verwendet wird. Bevorzugt werden Temperaturen zwischen 140 und 160 °C. Die nach diesem Verfahren erhältlichen Zeolithe sind beispielsweise als Katalysatoren bei Alkylierungs- und Isomerisierungsreaktionen sowie bei der Umsetzung von Methanol und/oder Dimethylether oder anderen niederen Alkoholen bzw. Ethern in Benzin oder Olefinen verwendbar.

Aufgabe der Erfindung ist es, demgegenüber ein weiteres Verfahren zur Herstellung von Zeolithen zur Verfügung zu stellen.

Dazu wird erfindungsgemäß ein Verfahren zur Herstellung von Zeolithen aus Glas mit einem Gehalt an $SiO_2$, Alkali und einem Oxid eines 3-wertigen Metalls durch Kristallisation in einem wässerigen Medium vorgeschlagen, bei dem man die Zeolithe in Gegenwart von Fluorwasserstoff kristallisiert.

Bei dem erfindungsgemäßen Verfahren löst sich das eingesetzte Glas in Gegenwart des Fluorwasserstoffs im wässerigen Medium auf. Ob beim Auflösen ein fester Rückstand zurückbleibt, kann davon abhängen, wie hoch der gewählte Feststoffgehalt im Reaktionsgemisch ist oder wie lange bzw. wie kurz man den Fluorwasserstoff auf das Ausgangsmaterial einwirken läßt. Einen eventuellen festen Rückstand kann man abfiltrieren. Der Vorteil, die Kristallisation der Zeolithe in Abwesenheit eines festen Rückstands durchzuführen, besteht darin, daß sich so Zeolithe frei von Ausgangsmaterial gewinnen lassen.

Man kann das eingesetzte Glas beispielsweise bei einer Temperatur im Bereich von 20 bis 100 °C, insbesondere von 30 bis 60 °C, lösen. Dieser Bereich soll dem Fachmann aber nur Richtwerte geben, da man auch jenseits der Grenzwerte arbeiten kann. Es ist vorteilhaft, das Lösen des Glases im wässerigen Medium durch Rühren zu beschleunigen.

Bei der Bildung der Zeolithe handelt es sich um eine hydrothermale Kristallisation, die man auch als Umkristallisation ansehen kann. Zur Bildung der Zeolithe wird die Lösung so weit abgekühlt, bis Kristallisation eintritt. Die anfallenden Kristalle können in an sich bekannter Weise von der Mutterlauge abgetrennt, gewaschen und getrocknet werden.

Zur Herstellung des wässerigen Reaktionsmediums kann man gasförmigen Fluorwasserstoff oder Flußsäure verwenden. Der Fluorwasserstoff läßt sich auch aus einem Fluorid freisetzen, etwa mit einer Mineralsäure, beispielsweise aus Calciumfluorid mit Schwefelsäure.

Vorzugsweise arbeitet man mit verdünnter Fluorwasserstoffsäure, es sind jedoch auch höher konzentrierte Säuren verwendbar (etwa eine 40-proz. Säure). Das Verdünnen der Fluorwasserstoffsäure wird dort seine Grenzen finden, wo die Reaktionsgeschwindigkeit nicht mehr befriedigt.

Vorzugsweise verwendet man feingemahlenes Glas als Ausgangsmaterial. Wenn man Borsilikatglas einsetzt, erhält man Zeolithe, deren Kristallstruktur der des Aluminosilikatzeolithen ZSM-5 entspricht.

Mit Hilfe bekannter Ionenaustauschtechniken läßt sich die Beladung der erhaltenen Zeolithe mit beispielweise Alkali- oder Erdalkaliionen gegen Protonen oder andere Kationen austauschen.

Nachstehend wird die Erfindung durch Beispiele näher erläutert.

### Beispiel 1

Es wurde feingemahlenes handelsübliches Borsilikatglas (mit einem Gehalt an etwa 79 Gew.-% $SiO_2$, 12 Gew.-% $B_2O_3$, 2,2 Gew.-% $Al_2O_3$ und 5 Gew.-% $Na_2O$) sukzessiv in 100 g verdünnter Flußsäure gegeben, bis sich nach 5 Tagen kein Glas mehr löste. Die Temperatur wurde im Bereich von 30 bis 60 °C gehalten. Danach wurde die Lösung soweit abgekühlt, daß sich Kristalle bildeten. Das angefallene kristalline Produkt wurde filtriert, gewaschen und getrocknet. Eine Röntgenbeugungsanalyse - vergleiche beiliegendes Diagramm - ergab, daß das gut kristalline Material dem Strukturtyp des Aluminosilikatzeolithen ZSM-5 entsprach.

2

Beispiel 2

Es wurde Beispiel 1 mit der einzigen Ausnahme wiederholt, daß die sukzessive Zugabe des Borsilikatglases nach 3 Tagen abgebrochen wurde. Es wurde eine geringere Ausbeute kristallines Material (Aluminosilikatzeolith ZSM-5) erhalten.

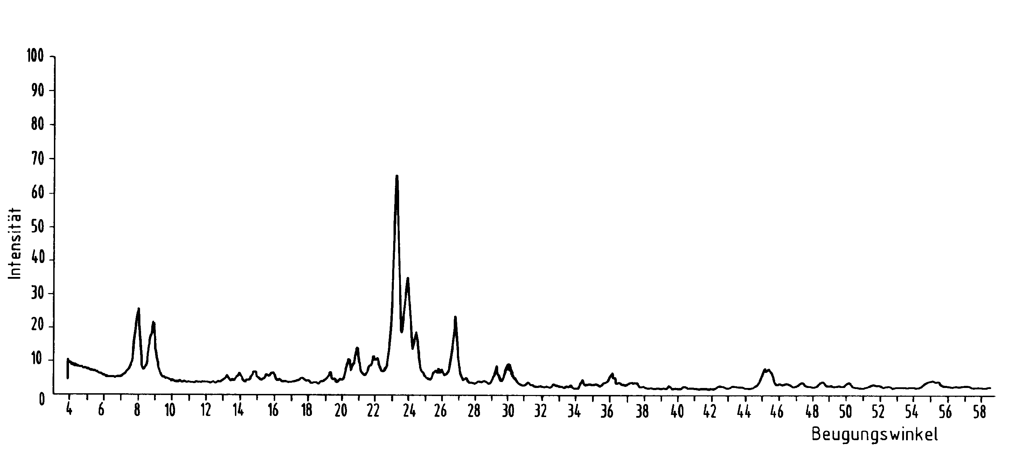

**Patentansprüche**

1. Verfahren zur Herstellung von Zeolithen aus Glas mit einem Gehalt an $SiO_2$, Alkali und einem Oxid eines 3-wertigen Metalls durch Kristallisation in einem wässerigen Medium, dadurch *gekennzeichnet*, daß man in dem wässerigen Medium Fluorwasserstoff auf das Glas einwirken läßt und den Zeolithen durch Abkühlen des wässerigen Mediums kristallisiert.

2. Verfahren nach Anspruch 1, dadurch *gekennzeichnet*, daß man in einem wässerigen Medium arbeitet, in dem der Fluorwasserstoff aus einem Fluorid freigesetzt wird.

3. Verfahren nach Anspruch 2, dadurch *gekennzeichnet*, daß man den Fluorwasserstoff mit einer Mineralsäure freisetzt.

4. Verfahren nach einem der vorhergehenden Ansprüche, dadurch *gekennzeichnet*, daß man feingemahlenes Glas verwendet.

5. Verfahren nach Anspruch 4, dadurch *gekennzeichnet*, daß man Borsilikatglas verwendet.

**Claims**

1. A method of producing zeolites from glass with a content of $SiO_2$, alkali and an oxide of a trivalent metal by crystallization in an aqueous medium, *characterised* in that in the aqueous medium hydrogen fluoride is allowed to act on the glass and the zeolites are crystallized by cooling of the aqueous medium.

2. A method according to claim 1, *characterised* in that work is carried out in an aqueous medium in which the hydrogen fluoride is released from a fluoride.

3. A method according to claim 2, *characterised* in that the hydrogen fluoride is released with a mineral acid.

4. A method according to one of the preceding claims, *characterised* in that finely ground glass is used.

5. A method according to claim 4, *characterised* in that borosilicate glass is used.

**Revendications**

1. Procédé de préparation de zéolite à partir de verre contenant $SiO_2$, de l'alcalin et un oxyde d'un métal trivalent, par cristallisation dans un milieu aqueux, *caractérisé* en ce qu'on fait réagir, dans le milieu aqueux, de l'acide florhydrique sur le verre et en ce qu'on fait cristalliser la zéolite par refroidissement du milieu aqueux.

2. Procédé selon la revendication 1, *caractérisé* en ce qu'on travaille dans un milieu aqueux, dans lequel l'acide fluorhydrique est libéré à partir d'un fluorure.

3. Procédé selon la revendication 2, *caractérisé* en ce qu'on libère l'acide fluorhydrique avec un acide minéral.

4. Procédé selon l'une quelconque des revendications précédentes, *caractérisé* en ce qu'on utilise du verre finement broyé.

9. Procédé selon la revendication 4, *caractérisé* en ce qu'on utilise du verre au borosilicate.

Beugungswinkel

Intensität

4